Europäisches Patentamt

European Patent Office

Office européen des brevets

(19)

(11) Publication number: **0 112 698**
**A1**

(12) **EUROPEAN PATENT APPLICATION**

(21) Application number: **83307678.9**

(22) Date of filing: **16.12.83**

(51) Int. Cl.³: **H 02 G 15/18, B 29 C 25/00**

(30) Priority: **17.12.82 GB 8236056**

(43) Date of publication of application: **04.07.84**
**Bulletin 84/27**

(84) Designated Contracting States: **AT BE CH DE FR IT LI NL SE**

(71) Applicant: **N.V. RAYCHEM S.A., Diestsesteenweg 692, B-3200 Kessel-lo (BE)**

(72) Inventor: **Martens, Franz, Kerkhofstraat 40, B-2670 Puurs (BE)**

(74) Representative: **Benson, John Everett et al, RAYCHEM Intellectual Property Law Departmente Swan House 37-39, High Holborn, London WC1 (GB)**

(54) **Wraparound sleeve.**

(57) A wraparound recoverable sleeve (1) for encapsulating cable splices has a flap (7) which underlies opposing edges (4) to provide a seal between them. The flap has recoverable longitudinal corrugations (8) which reduce the tendency of edges of the flap to dig into the overlying sleeve as the sleeve recovers. The lateral flexibility of the flap (7) is increased by the corrugations (8), and longitudinal bending is resisted until the corrugations (8) have recovered away and the material of the flap (7) softened. The corrugations (8) may be filled with a sealing material.

EP 0 112 698 A1

## WRAP-AROUND SLEEVE

This invention relates to an arrangement for providing a closure around an elongate substrate, particularly, though not exclusively a splice between telecommunications cables.

It is known to use recoverable articles to enclose telecommunications cable splices, and such articles may, for example, comprise a wraparound sleeve at least a portion of which is heat-recoverable, closed by a suitable closure means.

A heat recoverable article is an article the dimensional configuration of which may be made substantially to change when subjected to heat treatment. Usually these articles recover, on heating, towards an original shape from which they have previously been deformed but the term "heat-recoverable", as used herein, also includes an article which, on heating, adopts a new configuration, even if it has not been previously deformed.

In their most common form, such articles comprise a heat-shrinkable sleeve made from a polymeric material exhibiting the property of elastic or plastic memory as described, for example, in US Patents 2 027 962; 3 086 242 and 3 957 962. As is made clear in, for example, US Patent 2 027 962, the original dimensionally heat-stable form may be a transient form in a continuous process in which, for example, an extruded tube is expanded, whilst hot, to a dimensionally heat-unstable form but, in other applications, a preformed dimensionally heat-stable article is deformed to a dimensionally heat-unstable form in a separate stage.

In the production of heat-recoverable articles, the polymeric material may be cross-linked at any stage in the production of the article that will enhance the desired dimensional recoverability. One manner of producing a heat-recoverable article comprises shaping the polymeric material into the desired heat-stable form, subsequently cross-linking the polymeric material, heating the article to a temperature above the crystalline melting point, or, for amorphous materials, the softening point, as the case may be, of the polymer, deforming the article and cooling the article whilst in the deformed state so that the deformed state of the article is retained. In use, since the deformed state of the article is heat-unstable, application of heat will cause the article to assume its original heat-stable shape.

In other recoverable articles, as described, for example, in British Patent 1 440 524, an elastomeric member such as an outer tubular member is held in a stretched state by a second member, such as an inner tubular member, which, upon suitable treatment weakens and thus allows the elastomeric member to recover.

A wraparound closure is disclosed in British Patent No 1155470 which, together with other patent specifications referred to is incorporated herein by reference. In such an enclosure, a wraparound sleeve is formed as an elongate sheet or split tube and then wrapped around the cable. The sleeve has two uptstanding rails that may be secured together in abutment by a closure channel, made for example from stainless steel. One of the rails is usually located at one longitudinal edge of the sleeve while the other rail may be spaced from the other edge of the sleeve, the sleeve between said other rail and its adjacent sleeve edge forming a longitudinal flap that extends beneath the abutting rails.

In some arrangements, the first-mentioned rail may also be spaced from said one longitudinal edge (rather than being at that edge); and to allow for these two possibilites the phrase adjacent an edge portion is used in this specification. Alternatively, the flap may be discrete, in which case the rails are preferably situated at the edges of the sleeve.

The flap therefore helps to provide a seal between the abutting rails, and it is important to ensure that the flap is properly sealed against the inside of the overlapping portion of the sleeve. This is even more important in a further form of wraparound sleeve where, instead of being formed integrally therewith, the flap is provided as a discrete sealing member.

The flap is provided in order to maintain a seal between the two rails, particularly where the splice case is pressurised. The channel does of course provide the necessary clamping force to hold the rails together whilst the sleeve is recovered and any sealant present caused to melt and flow. When installation is complete the sealant in conjunction with the flap provides a barrier to pressure within the splice case and increases the leak path. In order for the flap to do its job properly it must be in tight contact with the sleeve at the base of the two rails, and thereby bridge the two rails. This tight contact can be ensured by the tension in the outer sleeve that results from its shrinkage: when the outer sleeve shrinks it causes the flap to be squeezed between the base of the rails and a rigid internal support member which will generally be provided around the wire splices themselves.

This operation requires tension to be generated, by the heat-shrinkage or otherwise, along the whole length of the closure. In a telecommunication cable splice case tension will generally be necessary at the ends of the case where it meets the ingoing cables in order to produce a good seal to the cables, but in some circumstances shrinkage could conveniently be omitted from the central region of the splice case. Such shrinkage can be omitted to allow more flexibility in the design of the sleeve and to reduce installation time and costs by providing an urging means within the splice case to force the flap or other sealing means against the base of the rails, so that the tension in the sleeve is not necessary. This arrangement is disclosed in our co-pending UK patent application 8130392, and it is particularly applicable where the flap is a discrete member, not integral with the sleeve.

Whether or not the flap is integral with the sleeve, it is necessary that the flap is able to conform to the recovered configuration of the sleeve over the substrate. In general, recovery will be shrinkage, and the flap will have to bend or curve inwards as the diameter of the overlying sleeve becomes smaller. It will also have to conform to any longitudinal variations in the diameter of the substrate, such as the transition from cable to splice bundle in a telephone cable splice. In unfavourable orientations or with poor installation techniques a kink may occasionally be formed and dig into the overlying sleeve during recovery, in the worst cases causing splitting. This kink may be formed in the flap at the top of the transition where the diameter of the sleeve must begin to decrease down to the size of the cable. Splitting may occur at other regions of the sleeve, but the mechanism described is believed to be the main problem.

A known way of reducing the tendency of the flap to cause splitting is to dock its ends. By docking is meant cutting the corners off the flap so that it has a trapezoid rather than a rectangular shape. The problem with this is that if sufficient flexibility is to be imparted to the flap its sealing properties are reduced, and the technique is only fully successful for certain sizes of sleeve. Nonethless, it is the accepted way of reducing splitting.

We have considered reducing splitting by making the flap more flexible. The immediate way of making the flap more flexible is to make it thinner, and this can be done by stretching it sufficiently (for example during the process by which the sleeve is made recoverable) or by extruding the sleeve with a thin flap. Each of these techniques, however, has problems. If the flap is stretched to a greater extent than the remainder of the sleeve, it becomes too wide and the bending problem is increased due to its large width. If on the other hand a shaped extrusion die is used to produce a thin flap then the range of manufacturing techniques is reduced if the weaker flap is not to become preferentially stretched during expansion of the sleeve.

Splitting is less likely if the flap is narrow, but a flap sufficiently narrow may not produce a reliable seal.

We have now designed a sleeve whose flap will bend or curve sufficiently and at the right moment during recovery such that splitting of the overlying sleeve is substantially reduced.

Thus, the present invention provides a recoverable wraparound sleeve having first fastening means adjacent a first edge portion, and second fastening means adjacent a second edge portion, and having a flap which can underlie

0112698

the adjacent first and second fastening means and seal between them when the sleeve is in the wrapped-around configuration; the flap having longitudinal corrugations prior to recovery of the sleeve which corrugations tend to disappear on recovery of the sleeve.

Each of the first and second fastening means is preferably an unbroken rail, the two rails having an undercut region by means of which they can retain a channel which holds them together during recovery. Such an arrangement is disclosed in UK patent specification 1155470. The fastening means could however each be discontinuous, rather than an unbroken rail. A further possibility is for the first fastening means to engage the second fastening means, rather than the two being held together by a third member such as the channel referred to. Although the fastening means are normally mechanical, an adhesive or other bonding system could be used. Also, the fastening means may be formed as part of the sleeve or constructed during assembly of the sleeve around a substrate.

The longitudinal corrugations on the flap allow the flap to curve in a transverse plane during recovery of the sleeve. Although we are not limited by any theory we believe that one or more of the following mechanisms is involved. Firstly the flexibility of the flap is increased by the corrugations or by the deformation to form the corrugations.
The second mechanism is a reduction in friction between the flap and the overlying sleeve as a result of the flap being corrugated and thus contacting the sleeve over a smaller area. The reduction in friction can be made more effective by the provision of hot-melt adhesive of sufficiently low melt viscosity between the flap and the overlying sleeve. If desired, the adhesive may fill

0112698

the first 1-3, preferably 2, corrugations closest to the rail. In such circumstances, the the corrugations preferably start immediately adjacent the rail. This adhesive can be provided as a strip of hot-melt material.

The third mechanism is that the longitudinal corrugations increase the rigidity of the flap to longitudinal bending. At first, therefore, the flap is unable to bend to follow the variation in diameter of the substrate, which it eventually must follow as recovery proceeds. This means that no sharp kink at the edge of the flap is formed at the top of the transition in the early stages of recovery. As heating to effect recovery is continued the corrugations in the flap disappear and the flap softens, finally becoming able to bend to follow the contour of the substrate. The effect of the corrugations is therefore to prevent longitudinal bending until the flap has softened to a degree that it is not able to produce a kink that can split the overlying sleeve.

The area of the flap over which corrugations should be provided will now be considered. As mentioned above the region at which splitting is most likely to occur is at the top of the transition from the splice bundle down to the cable, and the flap at this region should be corrugated. The length of the corrugations should bridge this region comfortably and may conveniently extend to the end of the sleeve, in which case the total length of corrugations will be from 50-100mm preferably about 70mm for the more common size of telephone cable splice. Where the sleeve is manufactured by a continuous process it may be found convenient if the flap is corrugated along its entire length.

The number of corrugations across the flap is not critical although we prefer that at least two be provided, and best results can be expected if corrugations are provided across the entire width of the flap, and if their number is from 2-6. A whole number of corrugations need not be provided, and often it is preferred that the first corrugation begins with a downstroke away from the rail and the last end in the opposite sense; reckoned as wave lengths, the preferred number would be from 2.5-5.5.

In order to ensure that the corrugations disappear on recovery of the sleeve, it is preferable that the flap corrugations be recoverable to a planar configuration, although in some circumstances hoop stresses in the sleeve will cause the flap to be squeezed flat against the underlying  substrate even if the corrugations are not recoverable. When the flap is referred to as becoming flat, what is meant is that there are substantially no short range deformations where the corrugations were; the flap may of course become curved over larger distances to conform to the susbtrate. The flap must be substantially flat after recovery in order that a good seal, with the maximum leak path, be formed beneath the rails or other fastening means. It is desirable that the corrugations are themselves heat unstable since this better ensures a flat final configuration, and also allows the heat softened flap to bend longitudinally according to the third mechanism postulated above.

Since enclosures comprising the sleeves of this invention are desirably impermeable to moisture vapour and other gases, the sleeves are generally internally coated with a sealant material, such as a hot-melt adhesive or reactive epoxy system, in order to seal the region where the sleeve contacts the ingoing cables or other substrates. Alternatively, strips of sealant may be placed around the cables before installation of the sleeve. With reference to the second of the three mechanisms mentioned above, it can be seen that it is desirable that the flap be coated with adhesive on the side thereof facing the rails. The primary function of the adhesive is to bond the overlying sleeve to seal the flap to the base of the large rail thus sealing the region between the rails. In addition to this, however, the adhesive can provide lubrication for sliding movement of the sleeve over the flap during recovery, and for this purpose the adhesive should have a sufficiently low viscosity at the  recovery temperature of the sleeve. The size of the flap and the shape of the corrugations can also be chosen to cause adhesive on the flap to flow during recovery into any gap that exists or is formed between the rails. The idea of deforming the flap to allow for such adhesive flow is disclosed and claimed in our copending UK patent application  8118362 which relates in general terms to means on the flap which allows passage of sealant, but does not disclose longitudinal corrugations. This allows an enclosure to be re entered and resealed by cutting away the rails and then a central portion of the enclosure, leaving butts of the enclosure around the substrates.  A new sleeve is shrunk over these remaining butts, and a good seal is ensured between the new sleeve and the butts due to the fact that the adhesive flow has blocked any longitudinal gap between the remnants of the old rails.

Where the sleeve is to be used to form an enclosure around a telecommunations cable splice or similar substrate, it is desirable to use a support liner between the splice and the sleeve. The function of the liner is to prevent damage to the splice by providing mechanical protection and water and heat barriers, and to give the final enclosure a pleasing shape. Such liners can ensure a gentle contour to the splice so that the transition between cable and splice bundle is neither too great nor too sharp. This will reduce the problem of splitting but it nonetheless remains a craft sensitive operation to ensure that splitting will not occur with some splice sizes. Liners can be made for example from metal half shells, from cardboard laminates and from plastics materials. These types of liners are disclosed respectively in UK patent specifications 1431167, 2059873 and 2069773.

A suitable method of production leading to recoverable corrugations is as follows. A cross-linking polymeric sheet material having longitudinal upstanding fastening means is laterally stretched when hot, and afterwards cooled, to render it heat recoverable. The area constituting the flap may also be stretched, but this is not essential. The flap is then corrugated by cold crunching or rolling. Such corrugation methods distort the flap, generally by stretching the material between the peaks and the troughs, in such a way that the flap reverts to its even configuration on heating. Pressure forming is preferably carried out at a temperature from 40-100°C, since lower temperature forming requires too much work and at higher temperatures any adhesive coating is likely to melt. About 70°C is most preferred.

The invention is now illustrated, by way of example, with reference to the accompanying drawings, in which :

Figures 1 and 2 show in section a standard sleeve being shrunk around a cable splice;

Figure 3 is a perspective view with the sleeve opened;

Figures 4 and 5 show a corrugated flap.

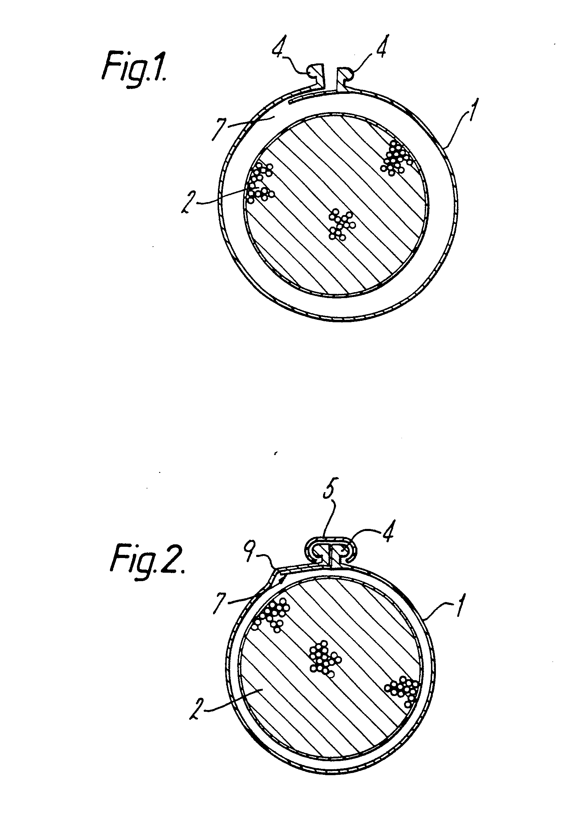

The first three Figures show what can happen when a standard sleeve is recovered around a substrate having a variation in diameter. A sleeve 1 having as fastening means upstanding rails 4 is wrapped around a splice bundle 2 joining cables 3. Before shrinkage, there is plenty of clearance between the sleeve 1 and the bundle 2 and as a result the flap 7 does not dig into the overlying sleeve. This situation is pictured in Figure 1. The rails 4 are then secured together by a channel 5 and the sleeve 1 is heated or otherwise recovered. As the sleeve 1 shrinks the flap 7 begins to dig into the sleeve as shown at 9 in Figure 2. It is at position 9 that the sleeve may begin to split.

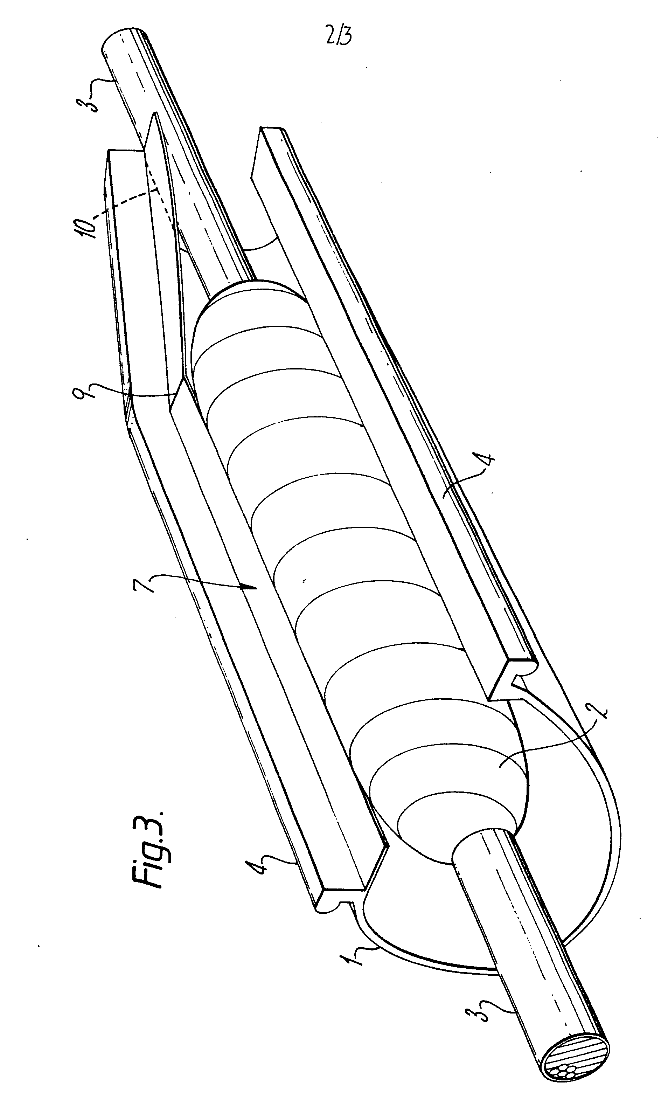

Figure 3 shows why in unfavourable circumstances splitting tends to begin at the top of the transition from splice bundle 2 to cables 3. This shows the situation after partial recovery, but the sleeve 1 has been partly opened so the flap 7 can be seen. The left-hand side of the drawing is not complete, the end of the sleeve having been cut-off for ease of drawing. As the sleeve 1 shrinks down to the cable 3 the flap 7 is caused to bend and it kinks at position 9. This kink is highly inflexible during the early stages of heat recovery and it digs into an overlying portion of the sleeve causing spliting. The flap could be docked along the dotted line 10 in order to aid bending, but it can be seen that the amount of docking would have to be so large to achieve a substantial increase in bending that sealing could be impaired.

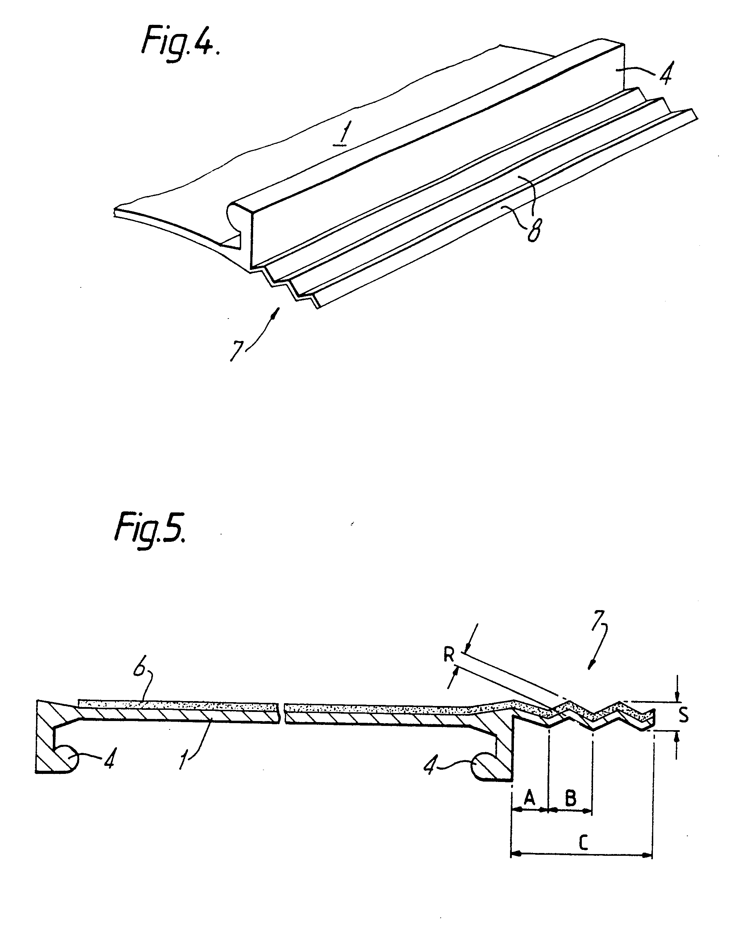

The invention solves the splitting problem by providing corrugations 8 in the flap 7, two arrangements of which are shown in Figures 4 and 5. As mentioned above, the corrugations need not extend throughout the entire width of the flap, neither need they extend for its whole length, although position 9 should be corrugated. It can be seen that the danger of a kink being formed at position 9 (or anywhere else) is reduced if the flap is able to curve in a plane transverse to the length of the sleeve 1. This increased transverse flexibility can be achieved by  the longitudinal corrugations. The third mechanism mentioned above can also be considered with reference to the drawings. One can see that longitudinal bending, which is required to produce the  kink at position 9, is prevented by the corrugations 8. As the sleeve 1 is heated to cause recovery two things happen : firstly on recovery the corrugations 8 disappear in addition to the usual radial shrinkage occuring, and secondly the material of the sleeve softens. The longitudinal bending which produces the kink is therefore only able to happen once the material has softened, after which a kink is less likely to cause splitting.

Figure 5 shows a sleeve 1 coated with a hot-melt adhesive 6, and also shows various dimensions which can be used to characterise the corrugations 8 of the flap 7. For the type of corrugations illustrated, which are merely preferred, the following dimensions may be considered typical:

| | | | |
|---|---|---|---|
| A | 3-10mm, preferably | 3.6mm, especially 4.5mm |
| B | 4-8mm, | -"- | 5.6mm, especially 5.5mm |
| C | 20-26mm, | -"- | 23mm |
| R | 1-2mm, | -"- | 1.5mm |
| S | 1-4.5mm, | -"- | 2.4mm, especially 3mm |
| Number of corrugations 2-6 -"-    3 | | | |

The region A immediately adjacent the rail is preferably flat so that the corrugations proper begin 3-10mm away from the rail. The adhesive coating which constitutes part of the thickness R is preferably 0.2-1.5mm, more preferably about 0.8mm.

## CLAIMS

1.    A recoverable wraparound sleeve having first fastening means adjacent a first edge portion, and second fastening means adjacent a second edge portion, and having a flap which can underlie the adjacent first and second fastening means and seal between them when the sleeve is in the wrapped-around configuration; the flap having longitudinal corrugations prior to recovery of the sleeve which corrugations tend to disappear on recovery of the sleeve.

2.    A sleeve according to Claim 1, which is heat-recoverable.

3.    A sleeve according to Claim 1 or 2, in which each of the first and second fastening means is an unbroken rail.

4.    A sleeve according to any of Claims 1,2 and 3, having corrugations extending the entire length of the flap.

5.    A sleeve according to any preceding claim, in which the corrugations are inherently recoverable.

6.    A sleeve  according to Claim 5, in which the corrugations are produced by pressure forming.

7. A sleeve according to any preceding claim, having a sealant material on a surface that is inwardly facing when the sleeve is in its wrapped around configuration.

8.    A sleeve according to Claim 7, in which the sealant material is a hot-melt adhesive.

9. A sleeve according to any preceding claim, having a hot-melt adhesive on the side of the flap that is outwardly facing when the sleeve is in its wrapped-around configuration.

10. A heat-recoverable wraparound sleeve having first fastening means adjacent a first edge portion, and second fastening means spaced from a second edge thus defining a flap between the second fastening means and the second edge which underlies the adjacent first and second fastening means when the sleeve is in its wrapped around configuration; the flap having heat-recoverable means which gives it longitudinal rigidity only before recovery.

11. A sleeve according to Claim 10, in which the heat-recoverable means is a plurality of longitudinal corrugations.

12. A sleeve according to any preceding claim, in which the flap is integral with said first edge portion or with said second edge portion.

13. A sleeve according to claim 12, in which one of said first and second fastening means is spaced from a first or second edge thus defining said flap.

14. A closure assembly for enclosing a substrate and comprising a sleeve according to any preceding claim and a closure means which can hold the first and second fastening means adjacent each other during recovery of the sleeve.

15. A closure assembly for enclosing a substrate and comprising a sleeve according to any preceding claim and a support liner for surrounding the substrate within the sleeve.

16.   A cable splice enclosed by a closure assembly according to Claim 14 or 15.

0112698

1/3

Fig.1.

Fig.2.

Fig.3.

0112698

**Fig.4.**

**Fig.5.**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | EP-A-0 065 383 (AMP)<br><br>* Page 2, line 32 - page 3, line 23; figures 1,2 * | 1-3,7, 8,14, 16 | H 02 G 15/18<br>B 29 C 25/00 |
| A,D | GB-A-1 155 470 (RAYCHEM)<br><br>* Page 3, lines 127-130; page 4, lines 1-23, 86-90; figures 1-14 * | 1-3,14 ,16 | |
| A | EP-A-0 042 262 (RAYCHEM)<br>* Page 11, paragraphs 2,3; page 12, paragraph 3; figures 1,4-6 * | 1-3 | |

**TECHNICAL FIELDS SEARCHED (Int. Cl. 3)**

H 02 G 15/00
B 29 C 27/00
F 16 L 47/00

The present search report has been drawn up for all claims

| Place of search | Date of completion of the search | Examiner |
|---|---|---|
| THE HAGUE | 06-03-1984 | LOMMEL A. |